Europäisches Patentamt

(19) European Patent Office

Office européen des brevets

(11) Veröffentlichungsnummer : **0 039 821**
**B1**

(12) **EUROPÄISCHE PATENTSCHRIFT**

(45) Veröffentlichungstag der Patentschrift :
28.12.83

(21) Anmeldenummer : 81103182.2

(22) Anmeldetag : 28.04.81

(51) Int. Cl.³ : **C 03 B    9/44**

(54) **Abgabestation einer Glasformmaschine.**

(30) Priorität : **13.05.80 DE 3018232**

(43) Veröffentlichungstag der Anmeldung :
**18.11.81 Patentblatt 81/46**

(45) Bekanntmachung des Hinweises auf die Patenterteilung : **28.12.83 Patentblatt 83/52**

(84) Benannte Vertragsstaaten :
**AT BE CH FR GB IT LI LU NL SE**

(56) Entgegenhaltungen :
**LU-A-    55 502**
**US-A- 1 911 119**
**US-A- 3 137 394**
**US-A- 3 650 725**

(73) Patentinhaber : **HERMANN HEYE**
**Allee**
**D-3063 Obernkirchen (DE)**

(72) Erfinder : **Schneider, Wilhelm**
**Feldstrasse 22**
**D-3262 Auetal 2 (DE)**
Erfinder : **Seidel, Hans-Georg**
**Gerhart-Hauptmann-Weg 7**
**D-3260 Rinteln (DE)**

(74) Vertreter : **Kosel, Peter, Dipl.-Ing. et al**
**Patentanwälte Dipl.-Ing. Horst Röse Dipl.-Ing. Peter**
**Kosel Postfach 129 Odastrasse 4a**
**D-3353 Bad Gandersheim (DE)**

Abgabestation einer Glasformmaschine

Die Erfindung betrifft eine Abgabestation gemäß dem Oberbegriff des Anspruchs 1.

Bei einer bekannten Abgabestation dieser Art (US-A-3 137 394) sind der Schwenkantrieb und der Hubantrieb durch gesonderte druckmediumbetätigbare Linearmotoren gebildet. Der bauliche Aufwand und der Raumbedarf sind hoch, zumal beide Antriebe eine verzweigte Druckmediumsteuerschaltung benötigen. Die einzelnen Antriebe und ihre Steuerschaltung sind für Wartung und Inspektion schlecht zugänglich.

Der Erfindung liegt die Aufgabe zugrunde, Schwenk- und Hubantrieb zu vereinfachen sowie besser zugänglich und betriebssicherer zu gestalten.

Diese Aufgabe ist durch die im Kennzeichnungsteil des Anspruchs 1 angegebenen Merkmale gelöst. Diese Ausbildung spart Raum und baulichen Aufwand. Die Antriebseinheit ist leicht zugänglich und bei Bedarf zu Wartung oder Reparatur austauschbar. Die Antriebseinheit ist immer dann von Vorteil, wenn einerseits die Mündungen der Glasgegenstände nach dem Öffnen der Mündungsformen aus dem Bewegungsbereich der Mündungsformen entfernt und andererseits, z. B. bei einer als Drehtisch ausgebildeten Glasformmaschine, in eine optimale Überschiebeschwenkstellung gebracht werden müssen, bevor der Überschiebevorgang beginnt. Die Hubbewegung der Absetzplatte ist erforderlich, weil die Glasgegenstände nach dem Verlassen der Fertigformen der Glasformmaschine sich noch in einem teilplastischen Zustand befinden. Würde man im Bereich der Abgabestation die Mündungsformen in diesem Zustand einfach öffnen und die Glasgegenstände auf die Absetzplatte über eine beträchtliche Höhe fallen lassen, müßte mit unerwünschten Formänderungen der Glasgegenstände gerechnet werden. Dies gilt insbesondere dann, wenn die Glasgegenstände nach dem Verlassen der Fertigformen und vor dem Erreichen der Absetzplatte verhältnismäßig hoch bauende Elemente der Glasformmaschine, z. B. die Überschiebevorrichtung, überfahren müssen. Dabei ist vorausgesetzt, daß die Mündungsformen zumindest im Bereich der Abgabestation eine Hubbewegung nicht ausführen können. Gleiches gilt, wenn als Transportelemente für die Glasgegenstände statt der Mündungsformen an sich bekannte Greifer verwendet werden.

Die Ausbildung der Antriebseinheit gemäß Anspruch 2 ist einfach und übersichtlich. Zweckmäßigerweise ist der Antriebsmotor als Elektromotor ausgebildet. Er ist in der Lage, sowohl die Hubbewegung, als auch die Schwenkbewegung der Absetzplatte zu erzeugen.

Die in Anspruch 3 vorgesehenen Verbindungselemente zwischen dem Antriebsmotor und der Welle sind einfach und störunanfällig und praktisch wartungsfrei. Die Universalgelenke können als einfache Kugelgelenke ausgebildet sein.

Gemäß Anspruch 4 läßt sich mit nur geringem Aufwand eine Schwenkbewegung wahlweise in der einen oder der anderen Richtung erreichen. Vorzugsweise ist dazu auch das vierte Universalgelenk wahlweise auf der einen oder der anderen Seite der Ebene angeordnet.

Die in Anspruch 5 vorgesehene Schwenkung geschieht vorzugsweise weg von dem Förderband, so daß eine vorherige Hubbewegung der Absetzplatte nicht erforderlich ist. Diese Schwenkung der Absetzplatte wird vor allem während des Anfahrens der Glasformmaschine mit Vorteil eingesetzt, wenn die Glasgegenstände noch nicht perfekt sind. Solche fehlerhaften Glasgegenstände sollen nicht auf das Förderband übergeschoben werden oder in irgendeiner Weise den Maschinenbetrieb behindern oder die schon auf dem Förderband stehenden einwandfreien Glasgegenstände beeinträchtigen. Durch das Wegschwenken der Absetzplatte können die noch nicht perfekten Glasgegenstände nach dem Öffnen der Mündungsformen in eine unterhalb der sonstigen Arbeitsposition der Absetzplatte befindliche Scherbenrückführung fallen.

Anspruch 6 bietet einen besonders einfachen Schwenkmechanismus. Der Schwenkmotor ist vorzugsweise als von Hand steuerbare doppeltwirkende Kolben-Zylinder-Einheit ausgebildet.

Die Erfindung wird nachfolgend anhand der in den Zeichnungen dargestellten Ausführungsbeispiele näher erläutert. Es zeigen :

Figur 1  eine schematische Draufsicht auf einen Teil einer I.S.-Maschine,

Figur 2  eine Einzelheit aus Figur 1 in vergrößerter Darstellung,

Figur 3  in schematischer Darstellung einen teilweisen Längsschnitt durch eine Abgabestation einer anderen Glasformmaschine, in in die Zeichenebene abgewickelter Darstellung,

Figur 4  eine Draufsicht auf einen Teil der Glasformmaschine gemäß Figur 3,

Figur 5  einen Längsschnitt durch Elemente einer Abgabestation gemäß Figur 4 in vergrößerter Darstellung,

Figur 6  die Schnittansicht nach Linie VI-VI in Figur 5 und

Figuren 7 bis 9  unterschiedliche elektronische Steuerschaltungen für den Antriebsmotor der zuvor erwähnten Abgabestationen.

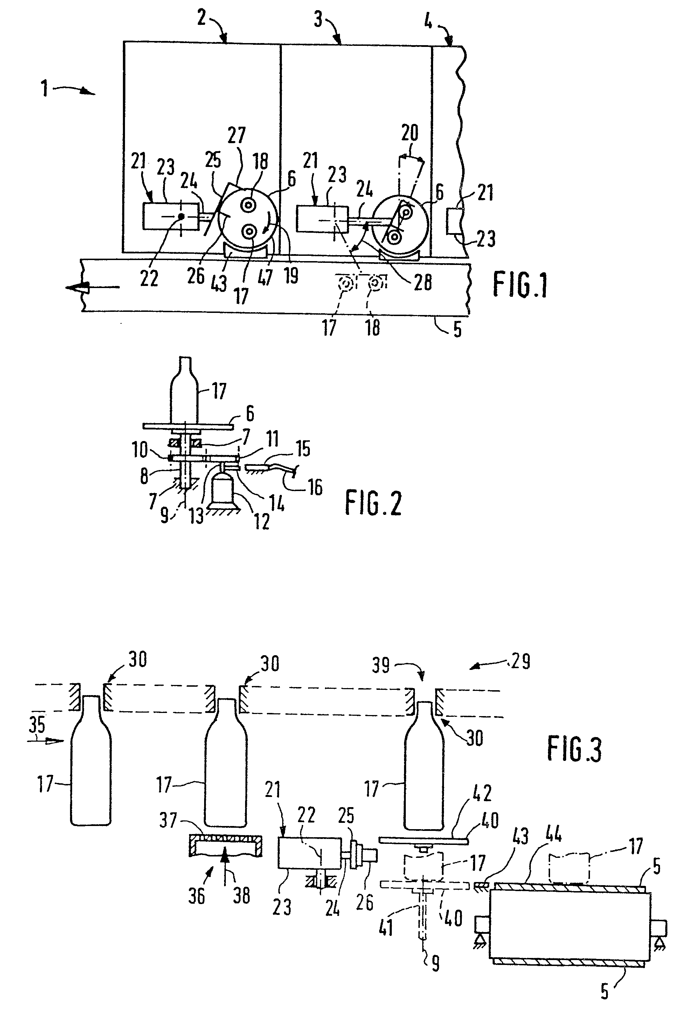

Fig. 1 zeigt eine sogenannte I.S.-Glasformmaschine 1 mit mehreren Stationen 2, 3 und 4, denen ein gemeinsames Förderband 5 zugeordnet ist. Jede Station 2, 3, 4 weist eine in der Draufsicht kreisförmige Absetzplatte 6 auf, die gemäß Fig. 2 an einer in einem Gehäuse 7 der I.S.-Glasformmaschine 1 drehbar gelagerten Welle 8 befestigt ist. Die Welle 8 ist zusammen mit der Absetzplatte 6 um eine Hochachse 9 der Absetzplatte 6 schwenkbar. An der Welle 8 ist ein Zahnrad 10 befestigt, das mit einem Ritzel 11 eines als Elektromotor ausgebildeten Antriebsmotors 12 kämmt.

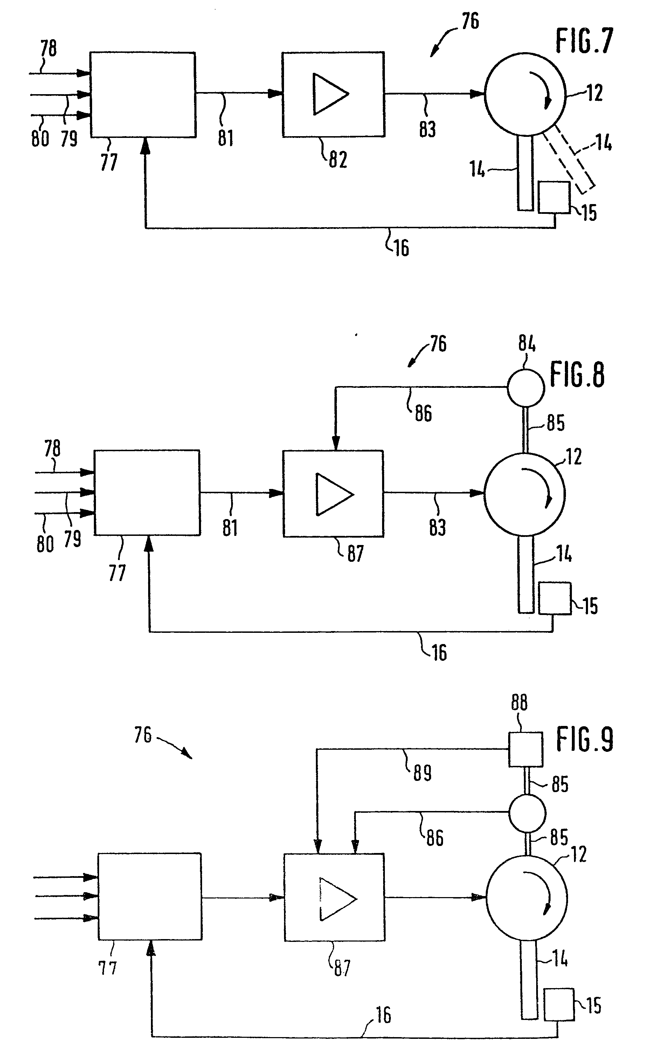

Der Antriebsmotor 12 ist maschinenfest angeordnet. Seine Antriebswelle 13 trägt eine Fahne 14, die mit einem maschinenfesten berührungslosen Magnetschalter 15 zusammenwirkt. Der Magnetschalter 15 liefert über eine elektrische Leitung 16 Stopsignale in eine elektronische Steuerschaltung, wie später im Zusammenhang mit den Figuren 7 bis 9 näher beschrieben wird. Bei dem Antriebsmotor 12 kann es sich um einen stufenlos in der Drehzahl regelbaren, permanent erregten Gleichstrom-Getriebemotor handeln.

In der Station 2 gemäß Figur 1 sind durch einen nicht dargestellten Greifer Glasgegenstände 17 und 18 gerade auf der Absetzplatte 6 abgesetzt worden. Nun wird in nicht im einzelnen beschriebener Weise der Antriebsmotor 12 eingeschaltet und schwenkt die Absetzplatte 6 um die Hochachse 9 in Richtung eines Pfeiles 19 aus einer für Station 2 gezeichneten Übernahmeschwenkstellung in eine für Station 3 gezeichnete Überschiebeschwenkstellung um einen Winkel 20. In der Überschiebeschwenkstellung betätigt die Fahne 14 gemäß Fig. 2 den Magnetschalter 15, so daß ein Stopsignal über die elektrische Leitung 16 in die elektronische Steuerschaltung gelangt und der Antriebsmotor 12 angehalten wird.

Jede der Stationen 2, 3, 4 ist ferner mit einer Überschiebevorrichtung 21 ausgestattet, die einen waagerecht liegenden, um eine Hochachse 22 schwenkbaren Zylinder 23 aufweist. Eine Kolbenstange 24 des Zylinders 23 trägt einen Überschieber 25 mit je einem Finger 26 und 27, die in folgender Weise mit den Glasgegenständen 17, 18 zusammenwirken.

Sobald die Absetzplatte 6 ihre Überschiebeschwenkstellung wie in Station 3 erreicht hat, wird die Kolbenstange 24 ausgefahren, bis die Finger 26, 27 gemäß Station 3 hinter den Glasgegenständen 17, 18 liegen. Sodann wird der Zylinder 23 durch nicht dargestellte Mittel um die Hochachse 22 um einen Winkel 28 geschwenkt, bis der Überschieber 25 die für Station 3 in Figur gestrichelt eingetragene Endstellung über dem Förderband 5 erreicht hat. In dieser Endstellung übergibt der Überschieber die Glasgegenstände 17, 18 an das Förderband 5. In dieser Stellung wird die Kolbenstange 24 derart in den Zylinder 23 eingezogen, daß der Finger 26 nicht in Berührung mit dem nachfolgenden Glasgegenstand 18 tritt. Danach wird der Zylinder 23 wieder um den Winkel 28 zurück in seine für die Stationen 2, 3, 4 gezeigte Stellung geschwenkt.

Vorteilhaft ist, daß der Winkel 28 kleiner als 90° sein kann, wodurch der Überschiebevorgang insgesamt günstig beeinflußt wird.

In den nachfolgenden Figuren sind jeweils gleiche Teile mit gleichen Bezugszahlen wie in den Figuren 1 und 2 versehen.

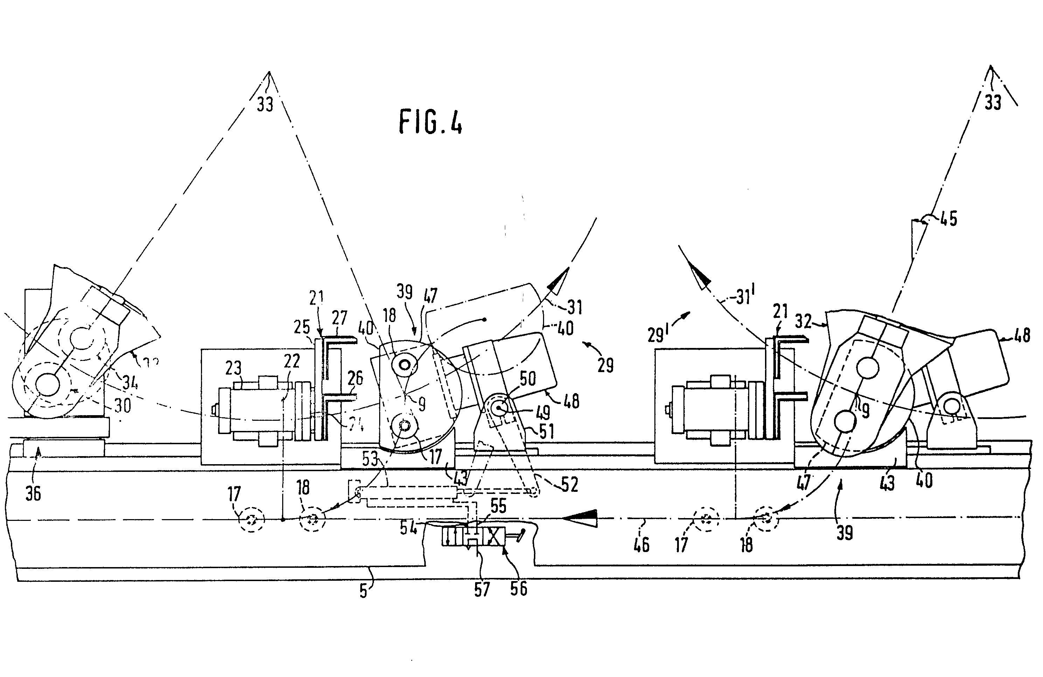

Fig. 3 betrifft eine andere Glasformmaschine. Diese Glasformmaschine 29 arbeitet im Doppelformbetrieb, stellt also jeweils gleichzeitig zwei Glasgegenstände 17, 18 her, wie dies auch bei der I.S.-Glasformmaschine 1 gemäß Fig. 1 der Fall ist. Die Glasformmaschine 29 weist eine Anzahl jeweils auf einer kreisförmigen Bahn 31 (Fig. 4) unabhängig voneinander bewegbare Mündungsformhalter 32 auf. Die Mündungsformhalter 32 kreisen um eine gemeinsame zentrale Achse 33, werden nacheinander in verschiedenen Bearbeitungsstationen zum absoluten Stillstand gebracht und tragen jeweils Mündungsformen 30 und 34 für die Glasgegenstände 17, 18.

Gemäß Fig. 3 bleiben die Mündungsformen 30, 34 während des gesamten Arbeitszyklus in einer Höhenebene. Nach dem Ausformen der Glasgegenstände 17, 18 aus den nicht gezeigten Fertigformen werden die Glasgegenstände 17, 18 an den Mündungsformen 30, 34 hängend gemäß Fig. 3 in Richtung eines Pfeiles 35 in eine Bodenkühlstation 36 der Glasformmaschine 29 gefahren und dort angehalten. Durch einen perforierten Boden 37 der Bodenkühlstation 36 strömt in Richtung eines Pfeiles 38 Kühlluft und kühlt die Böden der Glasgegenstände 17, 18. Anschließend werden die Glasgegenstände 17, 18 in Richtung des Pfeiles 35 weiterbewegt bis in eine Abgabestation 39 und dort wiederum angehalten. Die Mündungsformen 30, 34 werden geöffnet und lassen die Glasgegenstände 17, 18 auf eine Absetzplatte 40 fallen, die sich nur im geringen Abstand unterhalb der Glasgegenstände 17, 18 in einer in Fig. 3 voll ausgezogenen Übernahmehöhenstellung befindet. Die Absetzplatte 40 ist an einer Welle 41 befestigt, die in später zu beschreibender Weise sowohl schwenkbar als auch heb- und senkbar ist.

Nach der Übernahme der Glasgegenstände 17, 18 schwenkt die Absetzplatte 40 um einen gewissen Winkel und senkt sich ferner in eine in Fig. 3 gestrichelt eingetragene Überschiebehöhenstellung, in der eine obere Fläche 42 der Absetzplatte 40 sowohl mit einem stationären Zwischentisch 43 als auch mit einer oberen Fläche 44 des Förderbandes 5 fluchtet. In dieser Überschiebehöhenstellung der Absetzplatte 40 schiebt die Überschiebevorrichtung 21 in der zuvor im Zusammenhang mit Fig. 1 beschriebenen Weise die Glasgegenstände 17, 18 von der Absetzplatte 40 über den Zwischentisch 43 auf die Mitte des Förderbandes 5. Anschließend wird die Absetzplatte 40 wieder zurückgeschwenkt und in ihre Übernahmehöhenstellung angehoben und ist dann zur Übernahme der nächsten Glasgegenstände 17, 18 bereit.

Gemäß Fig. 4 ist rechts neben die Glasformmaschine 29 eine weitgehend identische Glasformmaschine 29' gestellt, deren Mündungsformhalter 32 sich in entgegengesetzter Drehrichtung auf einer kreisförmigen Bahn 31' bewegen. Die Bahnen 31, 31' treffen sich in einem Punkt, durch den die Längsachse einer nicht dargestellten, für beide Glasformmaschinen 29, 29' gemeinsamen Preßstation verläuft. Die Glasformmaschinen 29, 29' stellen die Glasgegenstände 17, 18 im Preß-Blas-Verfahren her.

In der Abgabestation 39 der Glasformmaschine 29' befindet sich die Absetzplatte 40 in einer Übernahmeschwenkstellung und gleichzeitig in der Übernahmehöhenstellung gemäß Fig. 3. In diesem Zustand werden die Mündungsformen 30, 34 geöffnet und lassen die Glasgegenstände 17, 18 auf die Absetzplatte 40 fallen. Anschließend wird die Absetzplatte 40 in ihre Überschiebehöhenstellung gemäß Fig. 3 abgesenkt und dabei um einen Winkel 45 im Gegenuhrzeigersinn bis in eine in Fig. 4 bei der Glasformmaschine 29 für die Absetzplatte 40 gezeichnete Überschiebeschwenkstellung geschwenkt. Im Gegensatz zu der Absetzplatte 40 der Glasformmaschine 29' gelangt die Absetzplatte 40 der Glasformmaschine 29 aus ihrer Übernahmeschwenkstellung in ihre Überschiebeschwenkstellung durch eine Schwenkung um ihre Hochachse 9 im Uhrzeigersinn.

Sobald die Absetzplatte 40 in ihrer Überschiebehöhenstellung und Überschiebeschwenkstellung angelangt ist, wird die Kolbenstange 24 der zugehörigen Überschiebevorrichtung 21 mit dem Überschieber 25 ausgefahren. Dann erfolgt die Schwenkung des Zylinder 23 um die Hochachse 22, bis die Glasgegenstände 17, 18 hintereinander auf einer Mittellinie 46 des Förderbandes 5 stehen.

Zumindest ein während dieses Überschiebens von den Glasgegenständen 17, 18 überquerter Umfangsbereich 47 der Absetzplatte 40 ist durch einen mit der Welle 41 konzentrischen Kreisbogen definiert. Ein während des Überschiebens bestehender Zwischenraum zwischen der Absetzplatte 40 und dem Förderband 5 ist durch den stationären Zwischentisch 43 überbrückt.

Die Welle 41 ist in einem Gehäuse 48 gelagert. Das Gehäuse 48 ist exzentrisch um eine im Abstand von der Hochachse 9 der Absetzplatte 40 und der Welle 41 angeordnete Schwenkachse 49 einer Schwenkwelle 50 außer Fluchtung mit den aus der Glasformmaschine 29, 29' eintreffenden Glasgegenständen 17, 18 schwenkbar. Die Schwenkwelle 50 ist an einer Lagergabel 51 der Abgabestation 39 drehbar gelagert und trägt einen Hebel 52, an dessen freiem Ende eine andererseits an der Abgabestation 39 angelenkte doppeltwirkende Kolben-Zylinder-Einheit 53 angelenkt ist. Die Kolben-Zylinder-Einheit 53 ist durch Leitungen 54 und 55 mit einem 4 Wege/3 Stellungsventil 56 verbunden, das an eine Druckluftleitung 57 angeschlossen ist. Wird das Ventil 56 in Fig. 4 nach rechts durchgeschaltet, wird der Hebel 52 aus seiner gestrichelten rechten Normalstellung in die strichpunktierte linke Endstellung geschwenkt. Dadurch wird im gleichen Maße die Schwenkwelle 50 mit dem Gehäuse 48 und der Absetzplatte 40 geschwenkt, so daß sich schließlich die Absetzplatte 40 in der in Fig. 4 bei der Glasformmaschine 29 strichpunktiert eingetragenen Endstellung befindet. In dieser Endstellung können neu ankommende Glasgegenstände 17, 18 unmittelbar in die Scherbenrückführung fallen und gelangen nicht auf das Förderband 5.

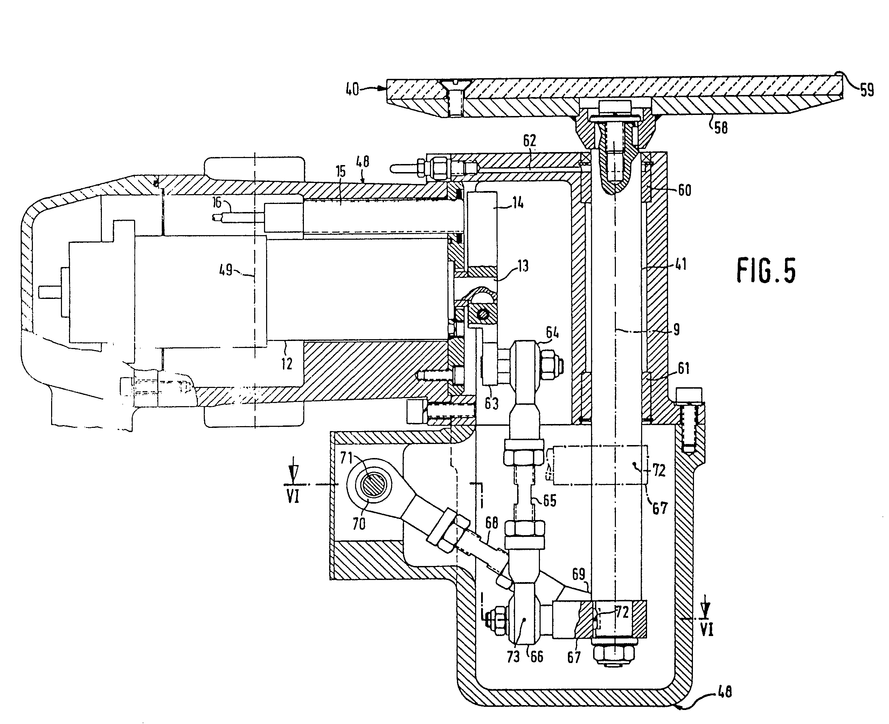

Gemäß Fig. 5 weist die Absetzplatte 40 eine mit der Welle 41 drehfest verschraubte Tragplatte 58 und eine mit der Tragplatte 58 verschraubte Deckplatte 59 aus einem feuerfesten Nichtmetall mit schlechten Wärmeleiteigenschaften auf. Die Elemente sind in Fig. 5 mit voll ausgezogenen Linien in ihrer Überschiebehöhenstellung und mit strichpunktierten Linien teilweise in ihrer Übernahmehöhenstellung gezeichnet.

Die Welle 41 ist in dem Gehäuse 48 durch zwei Gleitlager 60 und 61 gelagert, die durch eine Bohrung 62 in einer Wand des Gehäuses 48 mit Schmiermittel versorgt werden.

Auf der Antriebswelle 13 des Antriebsmotors 12 ist drehfest eine mit der Fahne 14 einstückig ausgebildete Antriebskurbel 63 montiert. Die Antriebskurbel 63 ist über ein als Kugelgelenk ausgebildetes erstes Universalgelenk 64 mit einer Pleuelstange 65 und die Pleuelstange 65 über ein als Kugelgelenk ausgebildetes zweites Universalgelenk 66 mit einem an der Welle 41 festgelegten Anschlußstück 67 verbunden. Ein Lenker 68 ist einerseits über ein als Kugelgelenk ausgebildetes drittes Universalgelenk 69 mit dem Anschlußstück 67 und andererseits über ein als Kugelgelenk ausgebildetes viertes Universalgelenk 70 mit einem Bolzen 71 des Gehäuses 48 verbunden.

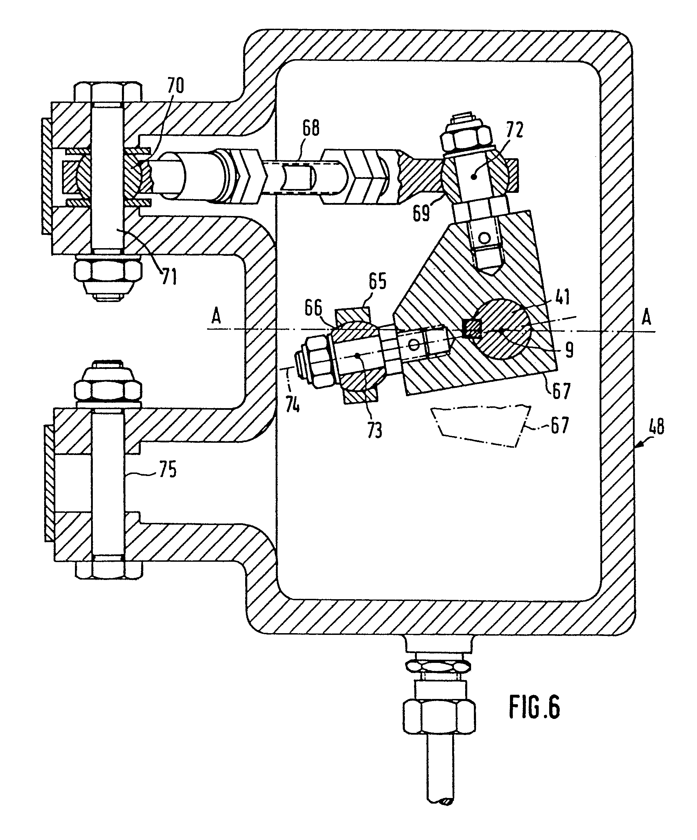

Wie auch Fig. 6 zeigt, ist ein Zentrum 72 des dritten Universalgelenks 69 außerhalb einer durch ein Zentrum 73 des zweiten Universalgelenks 66 und die Hochachse 9 der Absetzplatte 40 und der Welle 41 verlaufenden Ebene 74 angeordnet. Das dritte Universalgelenk 69 und das vierte Universalgelenk 70 sind gemäß Fig. 6 oberhalb der Ebene 74 angeordnet, können jedoch auch beide unterhalb der Ebene 74 liegen. Dazu muß lediglich das Anschlußstück 67 von der Welle 41 gelöst und um 180° um eine Achse A-A geschwenkt wieder montiert werden, so daß es die in Fig. 6 strichpunktiert angedeutete Stellung einnimmt. Das vierte Universalgelenk 70 wird dann an einem weiteren Bolzen 75 des Gehäuses 48 montiert. So läßt auf einfache Weise eine Schwenkung der Absetzplatte 40 in beiden Richtungen erzielen, wie sie z. B. bei den Glasformmaschinen 29, 29' gemäß Fig. 4 benötigt wird.

Fig. 7 zeigt eine elektronische Steuerschaltung 76 für den Antriebsmotor 12, der als stufenlos in der Drehzahl regelbarer, permanent erregter Gleichstrom-Getriebemotor ausgebildet ist. Die elektrische Leitung 16 führt zu einer Sollwertaufbereitungsschaltung 77. Einem weiteren Eingang der Sollwertaufbereitungsschaltung 77 werden über eine elektrische Leitung 78 Startsignale aus einer übergeordneten Steuerung der Glasformmaschine zugeführt. Ein anderer Eingang der Sollwertaufbereitungsschaltung 77 erhält über eine elektrische Leitung 79 einen Geschwindigkeitssollwert als Spannungswert und ein wiederum anderer Eingang über eine elektrische Leitung 80 einen Positioniersollwert ebenfalls als Spannungswert. Die Sollwertaufbereitungsschaltung 77 gibt über eine elektrische Leitung 81 einen Spannungssollwert in einen Leistungsverstärker 82, der über eine elektrische Versorgungsleitung 83 mit dem Antriebsmotor 12 verbunden ist.

Sobald gemäß Fig. 7 die Fahne 14 ihre gestrichelt eingetragene Stellung und damit den Magnetschalter 15 erreicht, wird über die elektrische Leitung 16 Sollwertaufbereitungsschaltung von dem Geschwindigkeitssollwert auf den Positioniersollwert umgeschaltet, so daß der Antriebsmotor 12 mit Schleichfahrt in seine gewünschte Endstellung gelangt.

Die elektronische Steuerschaltung 76 gemäß Fig. 8 weicht insofern von der Ausführungsform gemäß Fig. 7 ab, als ein Tachogenerator 84 über eine Antriebsverbindung 85 mit dem Antriebsmotor 12 gekuppelt und über eine elektrische Leitung 86 mit einem Regeleingang eines regelbaren Leistungsverstärkers 87 verbunden ist.

Eine weitere Abwandlung der elektronischen Steuerschaltung 76 bringt Fig. 9 insofern, als die Antriebsverbindung 85 auch einen Drehwinkelstellungsgeber 88 antreibt, der über eine elektrische Leitung 89 mit einem weiteren Regeleingang des regelbaren Leitungsverstärkers 87 verbunden ist.

**Ansprüche**

1. Abgabestation (39) mit einer Absetzplatte (6 ; 40) zur gleichzeitigen Aufnahme von wenigstens zwei Glasgegenständen (17, 18) aus einer Glasformmaschine (1 ; 29, 29') und mit einer die Glasgegenstände (17, 18) von der Absetzplatte (6 ; 40) auf ein Förderband (5) überschiebenden Überschiebevorrichtung (21), wobei die Absetzplatte (6 ; 40) zwischen einer die Glasgegenstände (17, 18) von der Glasformmaschine (1 ; 29, 29') übernehmenden Übernahmeschwenkstellung und einer die Glasgegenstände (17, 18) an die Überschiebevorrichtung (21) abgebenden Überschiebeschwenkstellung durch einen Schwenkantrieb (12, 11, 10 ; 67, 68) um eine Hochachse (9) hin und zurück schwenkbar ist, und wobei die Absetzplatte (40) zwischen einer die Glasgegenstände (17, 18) von der Glasformmaschine (29, 29') übernehmenden Übernahmehöhenstellung und einer tiefer als die Übernahmehöhenstellung im Wirkbereich der Überschiebe Vorrichtung (21) liegenden Überschiebehöhenstellung durch einen Hubantrieb (63, 65, 67) bewegbar ist, dadurch gekennzeichnet, daß der Schwenkantrieb (67, 68) und der Hubantrieb (63, 65, 67) mechanisch zu einer Antriebseinheit zusammengefaßt sind.

2. Abgabestation nach Anspruch 1, dadurch gekennzeichnet, daß die Antriebseinheit ein Gehäuse (48) und eine in dem Gehäuse (48) drehbar und längsverschiebbar gelagerte, an der Absetzplatte (40) befestigte Welle (41) aufweist, und daß an dem Gehäuse (48) ein über Verbindungselemente (63, 65, 67) mit der Welle (41) verbundener Antriebsmotor (12) befestigt ist.

3. Abgabestation nach Anspruch 2, dadurch gekennzeichnet, daß eine Antriebskurbel (63) des Antriebsmotors (12) über ein erstes Universalgelenk (64) mit einer Pleuelstange (65) und die Pleuelstange (65) über ein zweites Universalgelenk (66) mit einem an der Welle (41) befestigten Anschlußstück (67) verbunden sind, und daß ein Lenker (68) einerseits über ein drittes Universalgelenk (69) mit dem Anschlußstück (67) und andererseits über ein viertes Universalgelenk (70) mit dem Gehäuse (48) verbunden ist, wobei ein Zentrum (72) des dritten Universalgelenks (69) außerhalb einer durch ein Zentrum (73) des zweiten Universalgelenks (66) und eine Längsachse (vgl. 9) der Welle (41) verlaufenden Ebene (74) angeordnet ist.

4. Abgabestation nach Anspruch 3, dadurch gekennzeichnet, daß das dritte (69) und gegebenenfalls das vierte (70) Universalgelenk wahlweise auf der einen oder der anderen Seite der Ebene (74) angeordnet ist.

5. Abgabestation nach einem der Ansprüche 1 bis 4, dadurch gekennzeichnet, daß die Absetzplatte (40) um eine im Abstand von einer Längsachse (vgl. 9) der Welle (41) angeordnete Schwenkachse (49) außer Fluchtung mit den aus der Glasformmaschine (29, 29') eintreffenden Glasgegenständen (17, 18) schwenkbar ist.

6. Abgabestation nach Anspruch 5, dadurch gekennzeichnet, daß die Schwenkachse (49) die Längsachse einer an der Abgabestation (39) gelagerten Schwenkwelle (50) ist, und daß an der Schwenkwelle (50) einerseits das Gehäuse (48) und andererseits ein durch einen Schwenkmotor (53) betätigbarer Hebel (52) befestigt sind.

**Claims**

1. Transfer station (39) with a depositing plate (6 ; 40) for simultaneously receiving at least two glass articles (17, 18) from a glass-forming machine (1 ; 29, 29') and with a transferring device (21) for transferring the glass articles (17, 18) from the depositing plate (6 ; 40) to a conveyor (5), wherein the depositing plate (6 ; 40) is swivellable back and forth about a vertical axis (9) by means of a swivel unit (12, 11, 10 ; 67, 68) between a receiving swivelled position for receiving the glass articles (17, 18) from the glass-forming machine (1 ; 29, 29') and a transferring swivelled position for transferring the glass articles (17, 18) to the transferring device (21), and wherein the depositing plate (40) is movable by means of an actuator unit (63, 65, 67) between a receiving height position for receiving the glass articles (17, 18) from the glass-forming machine (29, 29') and a raised transferring height position lying lower than the receiving height position in the operative region of the transferring device (21), characterized in that the swivel unit (67, 68) and the actuator unit (63, 65, 67) are combined mechanically into one driving unit.

2. Transfer station according to claim 1, characterized in that the driving unit comprises a housing (48) and a shaft (41) secured to the depositing plate (40) and rotatably and longitudinally movably mounted in the housing (48) and in that a driving motor (12) connected with the shaft (41) by connecting means (63, 65, 67) is mounted on the housing (48).

3. Transfer station according to claim 2, characterized in that a driving crank (63) of the driving motor (12) is connected by means of a first universal joint (64) with a connecting rod (65) and the connecting rod (65) is connected by means of a second universal joint (66) with a connecting member (67) secured to the shaft (41) and in that a link-rod (68) is connected on the one hand by means of a third universal joint (69) with the connecting member (67) and on the other hand by means of a fourth universal joint (70) with the housing (48), wherein a centre (72) of the third universal joint (69) is located outside a plane (74) running through a centre (73) of the second universal joint (66) and a longitudinal axis (cf. 9) of the shaft (41).

4. Transfer station according to claim 3, characterized in that the third universal joint (69) and, if required, the fourth (70) is or are located selectively to one side or the other of the plane (74).

5. Transfer station according to any of claims 1 to 4, characterized in that the depositing plate (40) is swivellable about a swivel axis (49) located at a distance from a longitudinal axis (cf. 9) of the shaft (41) out of alignment with the glass articles (17, 18) arriving from the glass-forming machine (29, 29').

6. Transfer station according to claim 5, characterized in that the swivel axis (49) is the longitudinal axis of a swivel shaft (50) mounted at the transfer station (39) and in that the housing (48) and a lever (52) actuatable by a swivel motor (53) are fixed to the swivel shaft (50).

### Revendications

1. Poste d'évacuation (39) muni d'une plaque de dépôt (6, 40) servant à recevoir simultanément au moins deux objets en verre (17, 18) venant d'une machine à mouler le verre (1, 29, 29') et d'un dispositif de renversement (21) qui pousse les objets en verre (17, 18) de la plaque de dépôt (6, 40) sur une courroie transporteuse (5), la plaque de dépôt pouvant pivoter en va-et-vient autour d'un axe de hauteur (9) entre une position de pivotement de reprise où elle reprend les objets en verre (17, 18) de la machine à mouler le verre (1, 29, 29') et une position de pivotement de renversement où elle transmet les objets en verre (17, 18) au dispositif de renversement (21), la plaque de dépôt (40) pouvant être déplacée, par un entraînement de levage (63, 65, 67), entre une position de hauteur de reprise où elle reprend les objets en verre (17, 18) de la machine à mouler le verre (29, 29') et une position de hauteur de renversement située plus bas que la position de hauteur de reprise, dans la région d'action du dispositif de renversement (21), caractérisé par le fait que l'entraînement de pivotement (67, 68) et l'entraînement de levage (63, 65, 67) sont réunis mécaniquement en un groupe d'entraînement.

2. Poste d'évacuation selon la revendication 1, caractérisé par le fait que le groupe d'entraînement présente un carter (48) et un arbre (41) fixé à la plaque de dépôt (40) et monté de manière à pouvoir tourner et coulisser longitudinalement dans le carter (48) et qu'au carter (48) est fixé un moteur d'entraînement (12) relié à l'arbre (41) par l'intermédiaire d'éléments de liaison (63, 65, 67).

3. Poste d'évacuation selon la revendication 2, caractérisé par le fait qu'une manivelle d'entraînement (63) du moteur d'entraînement (12) est reliée par l'intermédiaire d'une première articulation universelle (64) à une bielle (65) et la bielle, par l'intermédiaire d'une deuxième articulation universelle (66), à un élément de raccordement (67) fixé à l'arbre (41) et qu'une biellette (68) est reliée d'une part, par l'intermédiaire d'une troisième articulation universelle (69) à l'élément de raccordement (67) et d'autre part, par l'intermédiaire d'une quatrième articulation universelle (70), au carter (48), un centre (72) de la troisième articulation universelle (69) étant disposé hors d'un plan (74) passant par un centre (73) de la deuxième articulation universelle (66) et un axe longitudinal (voir 9) de l'arbre (41).

4. Poste d'évacuation selon la revendication 3, caractérisé par le fait que la troisième (69) et éventuellement la quatrième (70) articulations universelles sont disposées au choix, de l'un ou de l'autre côté du plan (74).

5. Poste d'évacuation selon l'une des revendications 1 à 4, caractérisé par le fait que la plaque de dépôt (40) peut pivoter autour d'un axe de pivotement (49) disposé à distance d'un axe longitudinal (voir 9) de l'arbre (41), hors d'alignement avec les objets en verre (17, 18) arrivant de la machine à mouler le verre (29, 29').

6. Poste d'évacuation selon la revendication 5, caractérisé par le fait que l'axe de pivotement (49) est l'axe longitudinal d'un arbre de pivotement (50) monté au poste d'évacuation (39) et qu'à l'arbre de pivotement (50) sont fixés d'une part, le carter (48) et d'autre part, un levier (52) pouvant être actionné par un moteur de pivotement (53).

FIG.1

FIG.2

FIG.3

FIG.4

0 039 821

FIG.5

FIG.6

FIG.7

FIG.8

FIG.9